# FASCICULE DE BREVET EUROPEEN

(11) **EP 0 496 650 B1**
(45) Date de publication et mention de la délivrance du brevet: **21.09.1994**
(21) Numéro de dépôt: 92400085.4
(22) Date de dépôt: 13.01.1992
(51) Int. Cl.: B61L 3/00, B61L 3/12

(54) **Dispositif de contrôle automatique de vitesse, d'arrêt et d'aide à la conduite de véhicules, notamment ferroviaires**
Automatische Halte- und Geschwindigkeitsregelungsvorrichtung und Fahrhilfe, insbesondere für Gleisfahrzeuge
Automatic stopping and speed control device and vehicle driving aid, especially for rail vehicles

(30) Priorité: 24.01.1991 FR 9100812
(43) Date de publication de la demande: 29.07.1992
(73) Titulaire: AUTOMATISMES CONTROLES ET ETUDES ELECTRONIQUES, 24000 Périgueux (FR)
(72) Inventeur: Malon, Jean-Pierre, F-24420 Savignac les Eglises (FR)
(74) Mandataire: Obolensky, Michel

(56) Documents cités:
- FR-A- 2 126 716
- FR-A- 2 139 471
- FR-A- 2 542 268
- US-A- 3 787 679
- REVUE GENERALE DES CHEMINS DE FER. no. 6, Juin 1990, PARIS FR pages 23 - 28;GEORGES: 'PRINCIPES ET FONCTIONNEMENT DU SYSTEME D'AIDE A LA CONDUITE,AL'EXPLOITATION ET A LA MAINTENANCE (SACEM)'

## Description

La présente invention est relative aux dispositifs d'aide à la conduite de véhicules ferroviaires.

On a décrit au brevet français n° 83 03 706 déposé le 7 mars 1983 au nom de Monsieur Jean-Pierre Malon, un dispositif de conduite et/ou de contrôle d'un véhicule ferroviaire, comportant des moyens de division du trajet prévu pour le véhicule en intervalles d'espace successifs constituant au moins un programme inscrit dans le trajet, et des moyens de détection des limites desdits intervalles d'espace destinés à commander des moyens de pilotage et/ou de contrôle du véhicule.

Les intervalles d'espace successifs sont délimités par des jalons disposés le long du trajet, réalisés sous forme de codes d'identification dudit au moins un programme, les moyens de détection comprenant au moins un capteur de lecture desdits codes et des moyens de discrimination des signaux de sortie du capteur en fonction des conditions d'exploitation en vue de la détermination du programme à exécuter.

Le dispositif connu du type précité assure le déplacement en sécurité de rames sur un réseau de métro.

Le contrôle du train est assuré par la connaissance de deux informations essentielles.

L'état d'occupation de la voie en aval du mobile considéré (signalisation);

Les possibilités limites de la voie à l'endroit où se trouve le mobile (polygone limite de vitesse).

Dans le dispositif décrit au brevet précité, il y a transmission de l'état de la signalisation par des fréquences porteuses injectées dans les rails.

Les jalons posés au sol déterminent les profils de vitesses. Ils sont lus à bord du train par des capteurs embarqués.

On connaît en outre d'après le brevet n° 90 05 285 déposé le 25 avril 1990 au nom de la société ACELEC, un dispositif de contrôle automatique de vitesse utilisant des jalons "effaçables", lorsque plusieurs programmes peuvent être lus.

Dans les deux cas précités, le contrôle de la vitesse est assuré par mesure de la durée de parcours entre deux jalons successifs.

Quel que soit le dispositif de contrôle connu dont on envisage l'utilisation, la sécurité du dispositif repose sur une parfaite détection des jalons au sol.

En effet, un jalon non détecté autorise localement une survitesse par rapport à la vitesse qui serait autorisée dans le cas d'une détection normale de tous les jalons.

Par exemple, une panne de détection éliminant un jalon sur deux sur une zone à vitesse constante autorise un doublement de la vitesse maximale du train.

Par contre, la détection intempestive de jalons "fantômes" n'affecte pas la sécurité puisque cette détection de jalons supplémentaires qui n'existent pas en réalité diminue artificiellement la vitesse maximale autorisée.

Il est donc nécessaire de valider en sécurité la détection de tous les jalons de chaque ligne que ces jalons soient fixes ou escamotables.

FR-A-2 138 471 décrit un dispositif de contrôle automatique de vitesse, d'arrêt et d'aide à la conduite de véhicules notamment ferroviaires comprenant des moyens d'identification de position prévus dans des positions fixes dans chaque section de voie, des antennes de réception, des moyens d'identification, des moyens prévus sur le véhicule pour assurer que seule l'information géographique qui correspond à l'identité de position est transmise aux moyens de commande, une mémoire de stockage des informations codées sous forme numérique relatives au parcours suivi par le véhicule, des moyens de cohérence à fenêtre de sécurité destinés à assurer que les signaux concernant les moyens d'identification de position et les signaux provenant de la mémoire de parcours sont contenus dans un intervalle déterminé et un système de commande du fonctionnement automatique des freins dans le cas d'une vitesse excessive prolongée du véhicule.

Par ailleurs, l'utilisation de balises d'initialisation est connue d'après le document "Principes et fonctionnement du système d'aide à la conduite, à l'exploitation et à la maintenance (SACEM)" de Jean-Paul GEORGES, publié dans la revue générale des Chemins de Fer, n° 6, en juin 1990 à Paris.

L'invention vise à remédier aux inconvénients des dispositifs à programme inscrit dans le trajet à l'aide de jalons en créant un dispositif dont la construction soit considérablement simplifiée par rapport aux dispositifs connus précités et dont la sécurité soit considérablement améliorée.

Elle a donc pour objet un dispositif de contrôle automatique de vitesse, d'arrêt et d'aide à la conduite de véhicules notamment ferroviaires, comportant des jalons placés le long de la voie, des moyens de détection de jalons disposés le long de la voie ferrée et des moyens de traitement des signaux délivrés par les moyens de détection pour commander la vitesse du véhicule en fonction de sa position et de sa vitesse instantanée sur un canton de voie, les jalons disposés le long de la voie comportant sur chaque canton de voie des jalons disposés à intervalles constants ou aléatoires et, à l'entrée de chaque canton, des jalons disposés pour former une balise d'identification du canton considéré et d'initialisation du dispositif, les moyens de traitement des signaux délivrés par les moyens de détection comprenant une mémoire dans laquelle est stocké le programme de marche du véhicule sous la forme de codes associés à chaque jalon disposé au sol et contenant chacun une information relative à la nature du jalon au sol qui doit être détecté, une information relative à la vitesse de consigne du véhicule à la hauteur dudit jalon et une information relative au numéro du canton de voie parcouru, des moyens de cohérence à fenêtre de sécurité destinés à assurer que les signaux concernant les jalons détectés au sol et les signaux provenant de la mémoire de stockage du programme de marche du véhicule et relatifs au même jalon sont contenus dans une fenêtre spatiale de valeur prédéterminée et une chaîne de survitesse destinée à commander le freinage d'urgence du véhicule si lesdits signaux sont séparés d'une distance supérieure à ladite fenêtre spatiale, lesdits moyens de cohérence à fenêtre de sécurité comprenant un circuit symétrique de traitement des signaux provenant des moyens de détection de jalons et des signaux provenant de la mémoire de stockage du programme de marche du véhicule, et comportant pour les signaux provenant des moyens de détection de jalons, une première mémoire tampon connectée à une sortie des moyens de détection qui sont également connectés à une première porte dont une autre entrée est destinée à recevoir une information relative à la présence simultanée d'un signal provenant de la mémoire de stockage du programme de marche du véhicule et dont la sortie est reliée à l'entrée d'un premier registre à décalage de définition d'une fenêtre spatiale pour les signaux de jalons, une seconde porte ET recevant sur une entrée des signaux de jalons provenant des moyens de détection et sur son autre entrée une information relative à la présence du signal provenant de la mémoire de stockage du programme de marche du véhicule, la sortie de la seconde porte ET étant connectée à l'entrée de remise à zéro d'un second registre à décalage de définition d'une fenêtre pour les signaux issus de la mémoire de stockage du programme de marche du véhicule, et à l'entrée de remise à zéro d'une seconde mémoire tampon pour les signaux provenant de la mémoire de stockage du programme de marche du véhicule, la mémoire tampon étant connectée à une entrée de chacune des première et seconde portes ET, une troisième porte ET dont une entrée est connectée à la sortie de la première mémoire tampon et dont une seconde entrée est connectée à la sortie d'un compteur d'adresse commandant l'accès à ladite mémoire de stockage du programme de marche du véhicule et dont la sortie est connectée à l'entrée d'un second registre à décalage, de définition d'une fenêtre spatiale pour les signaux de jalons fictifs de la mémoire de stockage du programme de marche du véhicule, une quatrième porte ET dont une entrée est connectée à la sortie de la première mémoire tampon dont une autre entrée est connectée à la sortie du compteur d'adresse et dont la sortie est connectée à l'entrée de remise à zéro du premier registre à décalage ainsi qu'à une entrée de remise à zéro de la première mémoire tampon, les sorties du premier et second registres à décalage étant connectées chacune à une entrée d'une porte OU destinée à délivrer des signaux de commande de freinage d'urgence.

L'invention sera mieux comprise à l'aide de la description qui va suivre, donnée uniquement à titre d'exemple et faite en se référant aux dessins annexés, sur lesquels :
- la Fig.1 est un schéma synoptique de l'architecture du dispositif de contrôle et d'aide à la conduite suivant l'invention;
- la Fig.2 est un schéma électrique plus détaillé du dispositif de la Fig.1;
- la Fig.3 est un schéma électrique du circuit de contrôle de vitesse du dispositif de l'invention;
- la Fig.4 est un organigramme de cohérence d'initialisation du dispositif de la Fig.1;
- la Fig.5 est un organigramme de cohérence de détection du dispositif de la Fig.1;
- la Fig.6 est un organigramme de cohérence de lecture de mémoire du dispositif de la Fig.1; et
- la Fig.7 est un organigramme de la procédure de départ.

Pour garantir la détection des jalons au sol, le dispositif suivant l'invention utilise une description de la position de tous les jalons d'un trajet dans la mémoire d'un calculateur embarqué à bord du train.

Un capteur d'espace lié au train permet de faire progresser la mémoire pour générer un jalon fictif.

L'initialisation d'une telle description est assurée par une balise d'identification du canton de voie sur lequel le train pénètre. Un système à coincidence a fenêtre spatiale assure la validation de la détection du jalon au sol par rapport au jalon fictif en mémoire.

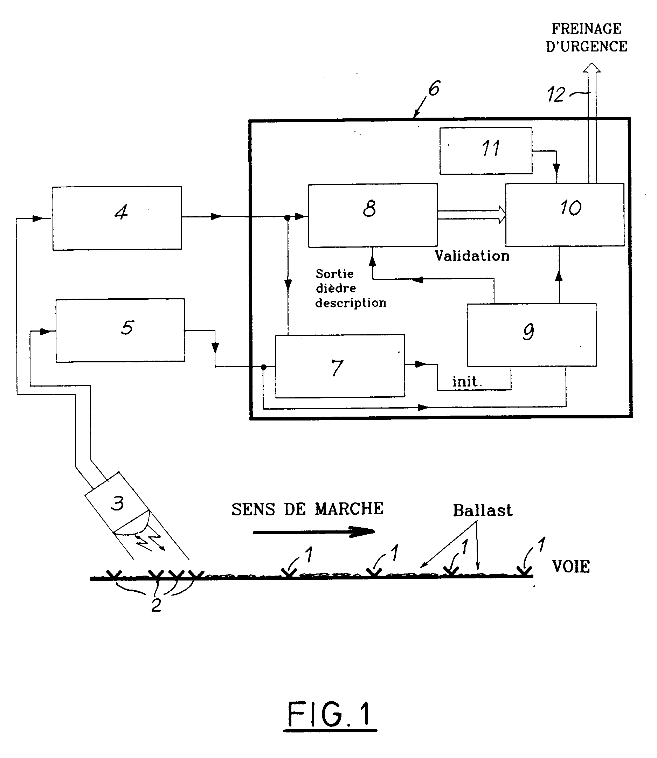

Le dispositif représenté à la Fig.1 est associé à une voie sur laquelle sont posés des jalons fixes en forme de dièdres 1 placés sur la voie à intervalles réguliers.

Des jalons 2 disposés à l'entrée de chaque canton de voie suivant une configuration déterminée forment une balise d'initialisation.

Le dispositif proprement dit comporte un radar Doppler 3 de détection des jalons 1 et 2, porté par un train, dirigé vers le ballast de la voie et orienté vers les jalons.

Le radar comporte une première sortie connectée à un circuit 4 de détection des jalons ou dièdres 1, 2 et une seconde sortie connectée à un circuit 5 de détection d'espace parcouru.

Ces deux circuits sont à leur tour connectés à un calculateur de sécurité 6 qui contient un circuit 7 de reconnaissance de balise d'initialisation comprenant une première entrée connectée à la sortie du circuit 5 de détection de balise et une seconde entrée connectée à la sortie du circuit 4 de détection de dièdres.

Le calculateur 6 comporte en outre un circuit 8 de cohérence à fenêtre de sécurité dont une entrée est connectée à la sortie du circuit 4 de détection de dièdres et dont une seconde entrée est reliée à une sortie d'une mémoire 9 contenant la description de pose des jalons ou dièdres correspondant à l'itinéraire que doit suivre le train correspondant et à la vitesse qu'il doit respecter.

La mémoire comporte en outre une entrée reliée au circuit 7 de reconnaissance de balises et une entrée connectée à la sortie du circuit 5 de détection d'espace.

Le circuit 8 de cohérence à fenêtre de sécurité est relié à une chaîne de survitesse 10 dont une entrée est connectée par ailleurs à la mémoire 9 et dont une autre entrée est connectée à un circuit de base de temps 11.

La sortie de la chaîne de survitesse 10 est connectée à une ligne 12 de liaison avec des moyens de freinage d'urgence, non représentés.

Les jalons ou dièdres 1, 2 posés au sol ont deux fonctions :
- initialisation de la position du train par balise;
- localisation en sécurité du train sur le canton de voie qu'il parcourt par identification de son parcours avec la description de celui-ci stockée dans la mémoire 9.

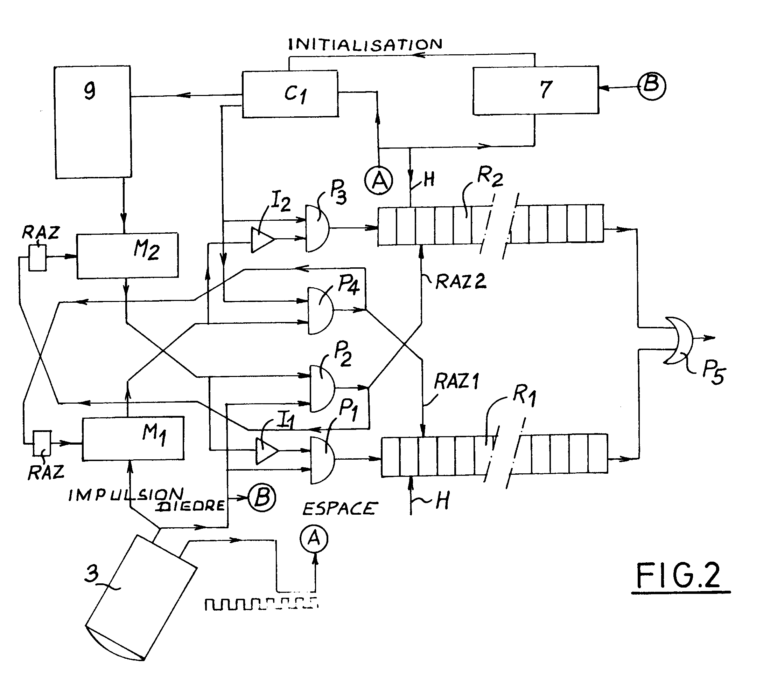

Le schéma de la Fig.2 comporte le radar Doppler dont une sortie est connectée à une mémoire tampon M1 de stockage des signaux résultant de la détection de jalons.

La mémoire 9 de description de pose des jalons est reliée à une mémoire tampon M2.

Les mémoires M1 et M2 sont connectées à des moyens de remise à zéro RAZ.

La sortie précitée du radar 3 est connectée à une entrée d'une porte ET P1 dont une autre entrée est connectée par l'intermédiaire d'un inverseur I1 à la sortie de la mémoire M2.

La sortie de la porte P1 est connectée à l'entrée d'un registre à décalage R1 qui comporte une entrée d'horloge H et une entrée de remise à zéro RAZ1.

La sortie de la mémoire M2 est connectée à une entrée d'une seconde porte ET P2 dont une autre entrée est reliée à la sortie de détection de jalons du radar 3.

La sortie de la mémoire M1 est connectée à une entrée d'une troisième porte ET P3 par l'intermédiaire d'un inverseur I2 ainsi qu'à une entrée d'une quatrième porte ET P4.

Les autres entrées des portes P3 et P4 sont connectées à la sortie d'un compteur d'adresse C1 également connecté à une entrée de la mémoire 9 de description de pose.

La sortie de la porte ET P3 est reliée à l'entrée d'un second registre à décalage R2 qui comporte une entrée d'horloge H et une entrée de remise à zéro RAZ2.

La sortie de la porte ET P2 est connectée à l'entrée de remise à zéro RAZ2 du registre R2.

La sortie de la porte ET P4 est connectée à l'entrée de remise à zéro RAZ1 du registre R1.

Le dispositif comporte enfin le circuit 7 de reconnaissance de balise d'identification commandé par les mêmes signaux d'horloge que les registres à décalage R1 et R2 que le compteur d'adresses C1 et dont l'entrée est connectée à la sortie d'espace parcouru du radar 3.

Le circuit 7 est connecté par sa sortie au compteur d'adresse C1.

Les registres à décalage R1 et R2 ont leurs sorties connectées aux entrées d'une porte OU P5 qui délivre un signal de commande de freinage d'urgence.

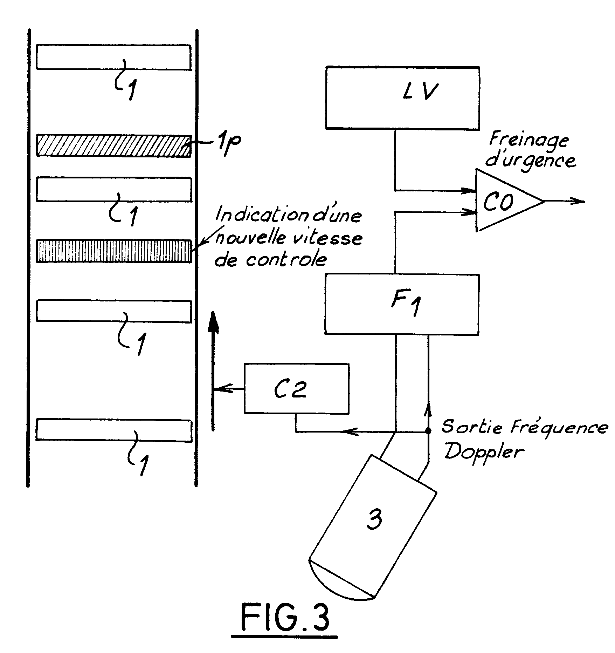

Le circuit de contrôle de vitesse représenté à la Fig.3 comporte un compteur d'adresse C2 relié à la sortie d'espace parcouru du radar 3. Cette sortie est également connectée à un fréquencemètre F1 de mesure de vitesse réelle.

La sortie du fréquencemètre F1 est connectée à une entrée d'un comparateur CO dont une autre entrée est connectée à un circuit LV de lecture de vitesse de consigne en mémoire.

La sortie du comparateur CO est destinée à agir sur des moyens de freinage d'urgence non représentés.

Le code mémorisé dans la mémoire 9 de description de pose comprend par exemple 8 bits de codage de la vitesse de consigne, 2 bits de codage du type de message, par exemple :
OO indique un jalon
O1 indique un jalon parasite
10 indique la vitesse de consigne
et 6 bits de codage du numéro du canton de voie.

Quant au radar 3, il voit comme indiqué à la Fig.3, la position des jalons 1, et la position d'un jalon parasite 1p.

Compte tenu de cette situation, on obtient l'indication d'une nouvelle vitesse de consigne.

Le fonctionnement de la chaîne de cohérence décrite en référence à la Fig.3 est le suivant.

Le système de cohérence reçoit sur une entrée les informations en provenance du radar Doppler 3.

Ce capteur fournit d'une part des impulsions de détection des jalons ou dièdres 1,2 posés au sol et d'autre part un signal représentatif de l'espace parcouru, ces signaux étant respectivement appliqués aux circuits de détection 4 et 5.

En même temps, il y a lecture dans la mémoire 9 des impulsions relatives aux jalons décrits sous la commande des signaux d'espace parcouru.

L'initialisation de l'adressage de cette lecture est faite grâce à la reconnaissance de la balise d'identification formée des jalons 2 au début du canton de voie considéré. Le compteur d'adresse C1 progresse ensuite au rythme du déplacement du train par la sortie espace du Radar Doppler 3.

Le circuit de cohérence est symétrique.

Il vérifie que lorsqu'une impulsion est présente sur l'une des entrées, une impulsion associée doit arriver sur l'autre entrée à l'intérieur d'une fenêtre spatiale d'une valeur déterminée, par exemple de 20 cm.

Dans le cas de la détection d'un jalon au sol, l'impulsion est :
- d'une part appliquée à la mémoire M1;
- d'autre part appliquée à l'entrée de porte ET P1.

La porte ET reçoit sur son autre entrée la sortie inversée de la mémoire M2.

Deux cas peuvent se présenter :
- Le dièdre ou jalon au sol est le premier à être détecté,
- Un dièdre en mémoire a déjà été détecté.

Dans le premier cas, le dièdre ou jalon détecté est mémorisé dans la mémoire M1.

L'impulsion est également transmise au registre à décalage R1 qui progresse au rythme de l'horloge d'espace.

L'impulsion est transmise par l'intermédiaire de la porte ET P1 car son autre entrée est à l'état 1 puisque la mémoire M2 est vide.

Si aucun signal de RAZ n'est appliqué au registre à décalage R1, l'impulsion d'entrée va sortir au bout de N impulsions d'horloge et appliquer un freinage d'urgence par l'intermédiaire de la porte OU P5.

Dans le deuxième cas, l'impulsion est appliquée à une entrée d'une porte ET P2 dont l'entrée reçoit le signal de la mémoire M2.

La sortie de la porte ET P2 sert de remise à zéro au registre à décalage R2 et également à la mémoire M2 après une temporisation.

La longueur de la fenêtre spatiale est fonction du nombre de bits du registre à décalage.

Si le radar Doppler 3 génère une impulsion tous les 2 cm, pour une longueur de fenêtre de 20 cm, le registre à décalage a dix cellules ou bits.

Le fonctionnement du contrôle de survitesse dans le cas d'une pose de jalons à pas constant est le suivant.

Le circuit de contrôle de vitesse représenté à la Fig.3, lit en mémoire les vitesses de consigne en fonction de la progression du train sur le canton de voie.

La progression à l'intérieur de la mémomire 9 est vérifiée en sécurité par le circuit de cohérence (Fig.2).

La sortie espace du radar 3 est reliée au fréquencemètre F1 qui indique la vitesse quasi-instantanée du train.

Cette vitesse est appliquée sous forme numérique au comparateur CO qui reçoit sur son autre entrée la vitesse de consigne mémorisée au point considéré dans la mémoire 9 et lue par le circuit de lecture LV.

La sortie du comparateur agit sur le freinage d'urgence si Vréelle > Vconsigne.

Si les jalons "parasites" 1p détectés au sol sont en nombre suffisant et sont répartis de façon régulière le long de la voie, il est possible de supprimer un certain nombre, voire tous les jalons à pas constant.

La mémoire de description 9 ne contient alors que les positions de ces jalons parasites.

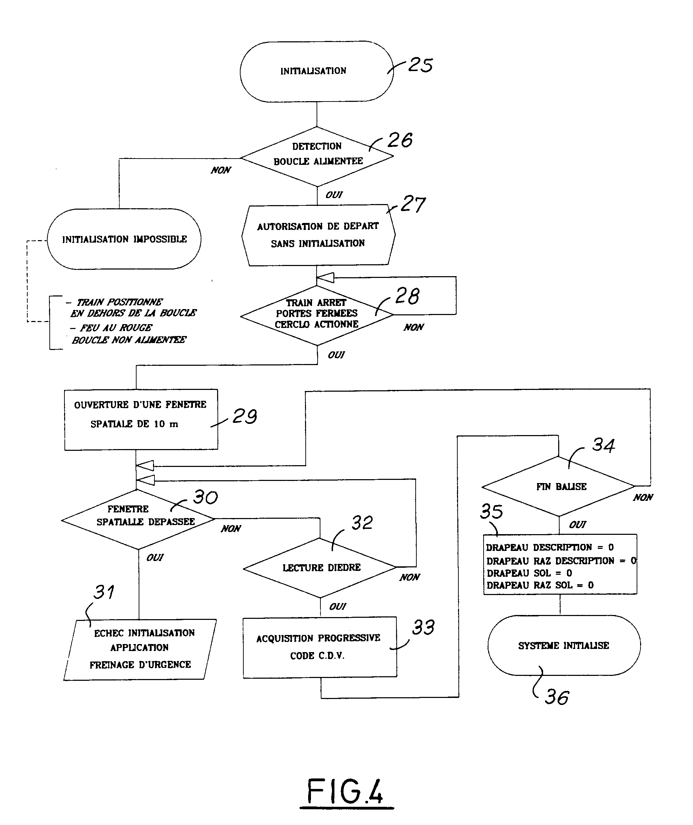

Le fonctionnement du dispositif suivant l'invention va être examiné en référence aux organigrammes des Fig.4 à 7.

Comme représenté à la Fig.4, l'initialisation du système est assuré au cours de la phase 25. Elle est immédiatement suivie par la détection de boucle alimentée, au cours de la phase 26.

Si la réponse est négative, l'initialisation est impossible, ce qui veut dire que :
- le train est positionné en dehors de la boucle concernée ;
- le feu de signalisation correspondant est au rouge ;
- la boucle concernée n'est pas alimentée.

Si la réponse est positive, il y a autorisation de départ sans initialisation au cours de la phase 27.

L'autorisation de départ étant donnée, on détermine au cours de la phase 28 si le train est à l'arrêt, si les portes du train sont fermées et si la cerclo est actionnée.

Dans la négative, on recommence la phase 28.

Dans l'affirmative, on passe à la phase 29 d'ouverture d'une fenêtre spatiale.

Au cours de la phase 30, on détermine le dépassement éventuel de la fenêtre spatiale.

Si tel est le cas, il y a au cours de la phase 31 constatation de l'échec de l'initialisation et application du freinage d'urgence.

Si la fenêtre spatiale n'est pas dépassée, on passe à une phase 32 de vérification de la lecture des jalons ou dièdres.

Si les jalons ne sont pas lus, on retourne à la phase 30 de détermination du dépassement de la fenêtre spatiale.

Si les jalons sont lus, on passe à la phase 33 d'acquisition progressive du code de canton de voie.

Ensuite, au cours de la phase 34, on détermine la fin de balise.

Si la balise n'est pas dépassée, on revient à la phase 30 de détermination de dépassement de la fenêtre spatiale.

Si la balise est dépassée, on constate au cours de la phase 35, la situation de drapeaux suivante:

| | |
|---|---|
| - Drapeau description | = 0 |
| - Drapeau RAZ description | = 0 |
| - Drapeau sol | = 0 |
| - Drapeau RAZ sol | = 0 |

Ceci signifie que le programme d'itinéraire inscrit dans la mémoire 9 (Fig.1) ainsi que les moyens de lecture des jalons au sol se trouvent à leur état initial.

Au cours de la phase 36, il y a indication que le système est initialisé.

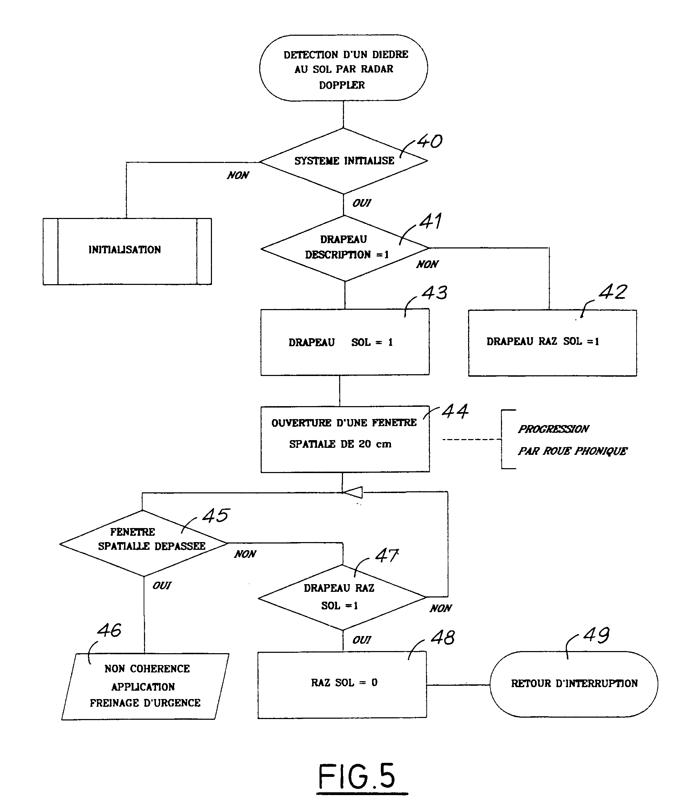

On passe ensuite conformément à l'organigramme de la Fig. 5 aux opérations de détection de jalons ou dièdres 1.

En vue de la détection d'un jalon au sol par le radar Doppler 3, on s'assure au cours de la phase 40 que le système est initialisé.

Dans la négative, on revient aux opérations d'initialisation décrites en référence à la Fig.4.

Dans l'affirmative, on passe à la phase 41 d'examen du drapeau de description.

Si le drapeau de description n'est pas égal à 1, le drapeau de remise à zéro au sol est égal à 1, comme indiqué à la phase 42.

Si le drapeau de description est égal à 1,le drapeau au sol est égal à 1, comme on le constate à la phase 43 et on passe à la phase 44 d'ouverture d'une fenêtre spatiale.

Si au cours de la phase 45, on constate que la fenêtre spatiale est dépassée, il y a constatation de non cohérence et application du freinage d'urgence au cours de la phase 46.

Si la fenêtre spatiale n'est pas dépassée, on détermine au cours de la phase 47 si le drapeau RAZ sol = 1.

Si non, on retourne à la phase 45 de détermination du dépassement de la fenêtre spatiale.

Si oui, on passe à la phase 48 remise à zéro RAZ sol = 0, puis à la phase 49 de retour d'interruption.

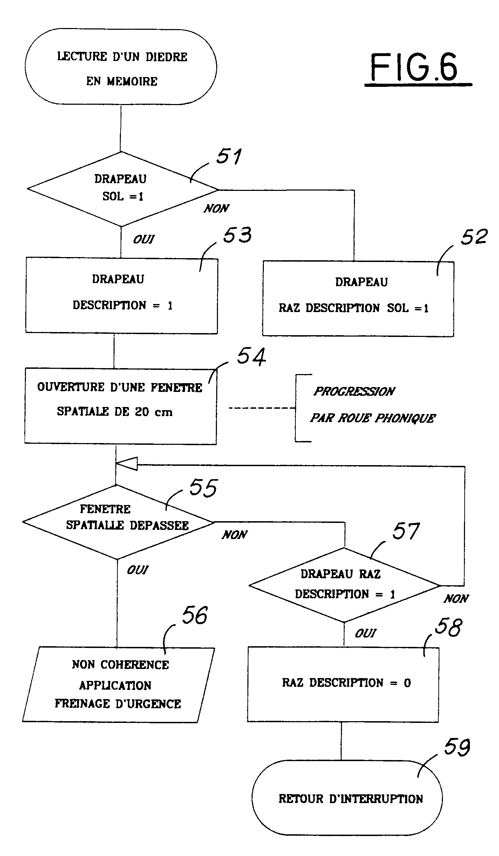

La lecture d'un jalon ou dièdre dans la mémoire 9 (Fig.1) va maintenant être décrite en référence à l'organigramme de la Fig.6.

Au cours de la phase 51, on s'assure que le drapeau sol = 1.

Si non, le drapeau RAZ description sol = 1 comme on le constate à la phase 52.

Si oui, le drapeau description = 1 ainsi qu'en témoigne la phase 53 et au cours de la phase 54, on procède à l'ouverture d'une fenêtre spatiale.

Si au cours de la phase 55, on constate que la fenêtre spatiale est dépassée, il y a non cohérence et application du freinage d'urgence au cours de la phase 56.

Si la fenêtre spatiale n'est pas dépassée, on détermine au cours de la phase 57, l'état du drapeau RAZ description.

Si le drapeau RAZ description n'est pas égal à 1, on revient à la phase 55 de détermination de l'état de dépassement de la fenêtre spatiale.

Si le drapeau RAZ description = 1, la remise à zéro de la description passe à 0 comme l'indique la phase 58 et il y a retour d'interruption au cours de la phase 59.

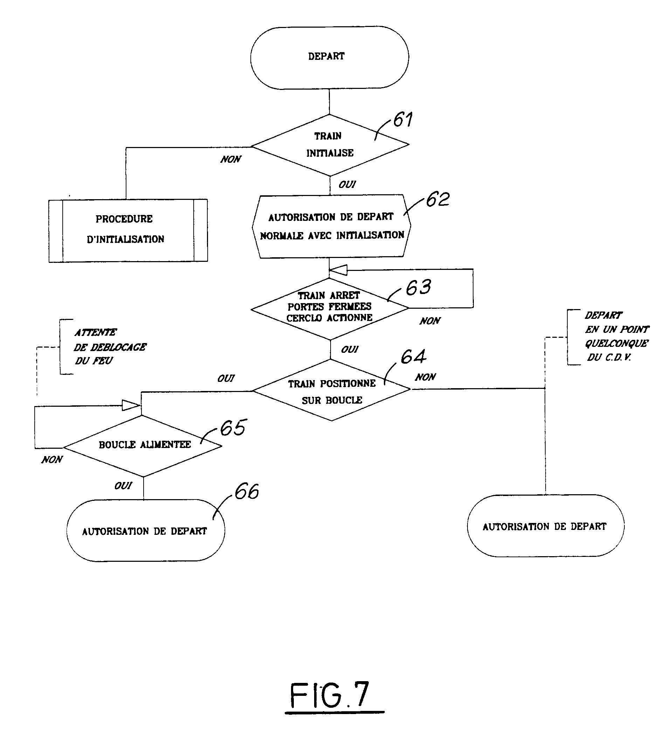

Le départ du train va être décrit en référence à l'organigramme de la Fig.7.

On s'assure d'abord au cours de la phase 61 que le train est initialisé.

Dans la négative, on retourne à l'initialisation décrite en référence à la Fig.4.

Dans l'affirmative, on procède au cours de la phase 62 à une autorisation de départ normale avec initialisation.

Au cours de la phase 63, on détermine l'état du train.

Si le train est à l'arrêt, portes fermées, "cerclo" actionné, on passe à la phase 64 de détermination du positionnement du train sur boucle.

Si non, on retourne à la phase 63 de détermination de l'état du train.

Si le train est positionné, on vérifie au cours de la phase 65 que la boucle est alimentée.

Dans l'affirmative, il y a autorisation de départ, au cours de la phase 66.

Dans la négative, on reprend la phase 65.

En même temps, il y a éventuellement attente de déblocage du feu qui interdit le départ.

Si le train n'est pas positionné sur la boucle, il y a autorisation de départ au cours de la phase 66, le départ pouvant avoir lieu en un point quelconque du canton de voie.

Le système de cohérence qui vient d'être décrit contrôle également la précision et la dérive du capteur d'espace puisque toute variation de l'espace mesuré engendre une perte de synchronisation.

Ce système de cohérence permet de garantir avec précision et sécurité la position du train sur la voie à chaque nouveau jalon détecté.

Toutefois, la vitesse limite autorisée est toujours représentée par la distance entre deux jalons consécutifs.

L'utilisation d'un calculateur et d'une mémoire de description permet d'implanter le programme de contrôle de vitesse à bord du train.

Les jalons posés au sol sont alors disposés à intervalles fixes, de même que les jalons fictifs décrits en mémoire.

Les jalons supplémentaires assurant le contrôle de vitesse sont uniquement décrits en mémoire, intercalés entre les jalons fictifs et affectés d'un repère particulier pour qu'ils ne soient pas pris en compte par la cohérence.

Le système suivant l'invention présente une souplesse accrue par rapport aux systèmes connus, puisqu'il permet de modifier l'enveloppe du contrôle de vitesse sans intervention sur les jalons de vitesse stockés dans la mémoire 9 (Fig.1).

Il est donc possible de faire rouler sur une même voie des trains ayant des caractéristiques différentes et donc des lois de contrôle de vitesse différentes.

L'espace ente deux jalons au sol définit le temps de "dormance" du système.

La précision sur la position du train et donc la précision sur le contrôle de vitesse dépend de la distance entre deux jalons consécutifs.

## Revendications

1. Dispositif de contrôle automatique de vitesse d'arrêt et d'aide à la conduite de véhicule notamment ferroviaires, comportant des jalons placés le long de la voie, des moyens de détection de jalons le long de la voie ferrée et des moyens de traitement des signaux délivrés par les moyens de détection pour commander la vitesse du véhicule en fonction de sa position et de sa vitesse instantanée sur un canton de voie, les jalons placés le long de la voie comportant sur chaque canton de voie des jalons (1) disposés à intervalles constants ou aléatoires et, à l'entrée de chaque canton, des jalons (2) disposés pour former une balise d'identification du canton considéré et d'initialisation du dispositif, les moyens de traitement des signaux délivrés par les moyens de détection comprenant une mémoire (9) dans laquelle est stocké le programme de marche du véhicule sous la forme de codes associés à chaque jalon disposé au sol et contenant chacun une information relative à la nature du jalon au sol qui soit être détecté, une information relative à la vitesse de consigne du véhicule à la hauteur dudit jalon et une information relative au numéro du canton de voie parcouru, des moyens (8) de cohérence a fenêtre de sécurité destinés à assurer que les signaux concernant les jalons détectés au sol et les signaux provenant de la mémoire (9) de stockage du programme de marche du véhicule sont contenus dans une fenêtre spatiale de valeur prédéterminée et une chaîne de survitesse (10) destinée à commander le freinage d'urgence du véhicule si lesdits signaux sont séparés d'une distance supérieure à ladite fenêtre spatiale, lesdits moyens de cohérence à fenêtre de sécurité comprenant un circuit symétrique de traitement des signaux provenant des moyens de détection de jalons et des signaux provenant de la mémoire (9) de stockage du programme de marche du véhicule, et comportant pour les signaux provenant des moyens (3) de détection de jalons, une première mémoire tampon (M1) connectée à une sortie des moyens de détection (3) qui sont également connectés à une première porte (P1) dont une autre entrée est destinée à recevoir une information relative à la présence simultanée d'un signal provenant de la mémoire (9) de stockage du programme de marche du véhicule et dont la sortie est reliée à l'entrée d'un premier registre à décalage (R1) de définition d'une fenêtre spatiale pour les signaux de jalons, une seconde porte ET (P2) recevant sur une entrée des signaux de jalons provenant des moyens de détection et sur son autre entrée une information relative à la présence du signal provenant de la mémoire (9) de stockage du programme de marche du véhicule, la sortie de la seconde porte ET (P2) étant connectée à l'entrée de remise à zéro d'un second registre à décalage (R2) de définition d'une fenêtre pour les signaux issus de la mémoire (9) de stockage du programme de marche du véhicule, et à l'entrée de remise à zéro d'une seconde mémoire tampon (M2) pour les signaux provenant de la mémoire (9) de stockage du programme de marche du véhicule, la mémoire tampon (M2) étant connectée à une entrée de chacune des première et seconde portes ET (P1, P2), une troisième porte ET (P3) dont une entrée est connectée à la sortie de la première mémoire tampon (M1) et dont une seconde entrée est connectée à la sortie d'un compteur d'adresse (C1) commandant l'accès à ladite mémoire (9) de stockage du programme de marche du véhicule et dont la sortie est connectée à l'entrée d'un second registre à décalage (R2), de définition d'une fenêtre spatiale pour les signaux de jalons fictifs de la mémoire (9) de stockage du programme de marche du véhicule, une quatrième porte ET (P4) dont une entrée est connectée à la sortie de la première mémoire tampon (M1) dont une autre entrée est connectée à la sortie du compteur d'adresse (C1) et dont la sortie est connectée à l'entrée de remise à zéro (RAZ), du premier registre à décalage (R1) ainsi qu'à une entrée de remise à zéro de la première mémoire tampon (M1), les sorties du premier et second registres à décalage étant connectées chacune à' une entrée d'une porte OU (P5) destinée à délivrer des signaux de commande de freinage d'urgence.

2. Dispositif de contrôle suivant la revendication 1, caractérisé en ce que la chaîne de survitesse (10) comporte un fréquencemètre (F1) connectée à la sortie des moyens (3) de détection de jaons, un dispositif (LV) de lecture de vitesse de consigne mémorisée dans la mémoire (9) de stockage du programme de marche du véhicule, un comparateur numérique (Co) des signaux de sortie du fréquencemètre (F1) et du dispositif de lecture (LV) et destiné à délivrer à sa sortie un signal de commande de freinage d'urgence lorsque la vitesse détectée par les moyens de détection (3) est supérieure à la vitesse de consigne.

3. Dispositif de contrôle suivant l'une des revendications 1 et 2, caractérisé en ce que ladite mémoire (9) de stockage du programme de marche du véhicule contient des codes correspondant à des jalons fictifs d'indication de nouvelles vitesses de contrôle destinés à modifier la vitesse du véhicule en des points déterminés de son trajet, la lecture de ces jalons de vitesse étant commandée par les signaux d'espace parcouru provenant desdits moyens (3) de détection de jalons.

4. Dispositif de contrôle suivant l'une des revendications 1 et 2, caractérisé en ce que ladite mémoire (9) de stockage du programme de marche du véhicule contient des codes correspondant à des jalons parasites que les moyens de détection (3) sont amenés à voir lors du déplacement du véhicule.

## Claims

1. Device for the automatic control of speed, stopping and for assisting the driving of vehicles, especially rail vehicles, having markers placed along the track, means for detecting the markers placed along the railway track and means for processing the signals supplied by the detection means in order to control the speed of the vehicle as a function of its position and its instantaneous speed on a track section, the markers located along the track having on each track section markers (1) positioned at constant or random intervals, and at the entrance to each section, markers (2) positioned so as to form an identification beacon for the section in question and for initializing the device, the means for processing the signals supplied by the detection means incorporating a memory (9) in which is stored the progress programme of the vehicle in the form of codes associated with each marker placed on the ground and in each case containing an information relative to the nature of the marker on the ground which has to be detected, an information relative to the set-point speed of the vehicle level with said marker and an information relative to the number of the track section covered, safety window coherence means (8), for ensuring that the signals concerning the markers detected on the ground and the signals coming from the vehicle progress programme storage memory(9) and relative to the same marker are contained in a spatial window of predetermined value and an overspeed chain (10) for controlling the emergency braking of the vehicle if said signals are separated by a distance exceeding said spatial window, said safety window coherence means incorporating a symmetrical circuit for processing signals from the marker detection means and signals from the vehicle progress programme storage memory (9), and having for the signals coming from the marker detection means (3), a first buffer memory (M1) connected to an output of the detection means (3), which are also connected to a first gate (P1), whose other input receives an information relative to the simultaneous presence of a signal from the vehicle progress programme storage memory (9) and whose output is connected to the input of a first shift register (R1) for defining a spatial window for the signals of the markers, a second AND gate (P2) receiving on an input signals from the markers from detection means and on another input an information relative to the presence of the signal from the vehicle progress programme storage memory (9), the output of the second AND gate (P2) being connected to the zeroing input of a second shift register (R2) for defining a window for the signals from the vehicle progress programme storage memory (9), and to the zeroing input of a second buffer memory (M2) for the signals from the vehicle progress programme storage memory (9), the buffer memory (M2) being connected to an input of each of the first and second AND gates (P1, P2), a third AND gate (P3), whereof an input is connected to the output of the first buffer memory (M1) and whereof a second input is connected to the output of an address counter (C1), controlling the access to said vehicle progress programme storage memory (9) and whose output is connected to the input of a second shift register (R2) for defining a spatial window for the signals of fictitious markers of the vehicle progress programme storage memory (9), a fourth AND gate (P4), whereof one input is connected to the output of the first buffer memory (M1) and whereof another input is connected to the output of the address counter (C1) and whereof the output is connected to the zeroing input (ZI) of the first shift register (R1), as well as to a zeroing input of the first buffer memory (M1), the outputs of the first and second shift registers being in each case connected to an input of an OR gate (P5) for supplying the emergency braking control signals.

2. Control device according to claim 1, characterized in that the overspeed chain (10) comprises a frequency meter (F1) connected to the output of the marker-detection means (3), a device (LV) for reading the set-point speed stored in the memory (9) storing the vehicle progress programme, a digital comparator (Co) comparing the output signals of the frequency meter (F1) and of the reading device (LV) and intended for supplying at its output an emergency-braking control signal when the speed detected by the detection means (3) is higher than the set-point speed.

3. Control device according to one of claims 1 and 2, characterized in that said memory (9) storing the vehicle progress programme contains codes corresponding to dummy markers for indicating new control speeds, intended for modifying the speed of the vehicle at specific points on its route, the reading of these speed markers being controlled by the space-covered signals coming from said marker detection means (3).

4. Control device according to one of claims 1 and 2, characterized in that said memory (9) storing the vehicle progress programme contains codes corresponding to spurious markers which the detection means (3) are prompted to see during the movement of the vehicle.

## Patentansprüche

1. Automatische Geschwindigkeits- und Halteregelungsvorrichtung und Fahrhilfe, insbesondere für Schienenfahrzeuge, mit:
- entlang des Gleises angeordneten Baken,
- einer Einrichtung zum Erkennen der Baken entlang des Gleises und
- einer Einrichtung zum Verarbeiten der von der Erkennungseinrichtung gelieferten Signale, um die Fahrzeuggeschwindigkeit in Abhängigkeit von seiner Position und seiner momentanen Geschwindigkeit auf einem Streckenabschnitt zu regeln,
- wobei die entlang des Gleises angeordneten Baken in jedem Gleisabschnitt Baken (1), die in konstanten Intervallen oder regellos angeordnet sind, und, am Anfang jedes Abschnitts, Baken (2) aufweisen, die zur Bildung einer Markierung zur Identifizierung des betreffenden Abschnitts und zum Initialisieren der Vorrichtung angeordnet sind,
- wobei die Einrichtung zum Verarbeiten der von der Erkennungseinrichtung gelieferten Signale einen Speicher aufweist, in dem der Fahrplan des Fahrzeugs in Form von Kodes gespeichert ist, die jeder auf dem Boden angeordneten Bake zugeordnet sind und von denen jeder eine die Beschaffenheit einer erkannten Bodenbake betreffende Information, eine die Sollgeschwindigkeit des Fahrzeugs auf der Höhe der Bake enthaltende Information und eine die Nummer des durchfahrenen Gleisabschnitts betreffende Information enthält,
- einer Sicherheitsfenster-Kohärenzeinrichtung (8) Zum Gewährleisten, daß die die am Boden erkannten Baken betreffenden Signale und die vom Fahrplanspeicher (9) des Fahrzeugs kommenden Signale in einem Raumfenster mit vorbestimmtem Wert enthalten sind, und
- einem Übergeschwindigkeitskreis (10) zum Notbremsen des Fahrzeugs, wenn die Signale einen Abstand voneinander aufweisen, der größer ist als das Raumfenster,
- wobei die Sicherheitsfenster-Kohärenzeinrichtung aufweist:
- eine symmetrische Schaltung zum Verarbeiten der von der Bakenerkennungseinrichtung und der von dem Fahrzeugfahrplanspeicher (9) kommenden Signale, und
- einen für die von der Bakenerkennungseinrichtung (3) kommenden Signale vorgesehenen ersten Pufferspeicher (M1), der mit einem Ausgang der Erkennungseinrichtung (3) verbunden ist, welche ferner mit einem ersten Gatter (P1) verbunden ist, wobei ein weiterer Eingang des Gatters dem Empfang einer das gleichzeitige Vorhandensein eines von dem Fahrzeugfahrplanspeicher (9) kommenden Signals betreffenden Information vorgesehen ist und der Ausgang des Gatters mit dem Eingang eines ersten Schieberegisters (R1) zum Definieren eines Raumfensters für die Bakensignale verbunden ist,
- ein zweites UND-Gatter (P2), das an einem Eingang von der Erkennungseinrichtung kommende Bakensignale und an seinem anderen Eingang eine Information empfängt, die das Vorhandensein eines von dem Fahrzeugfahrplanspeicher (9) kommenden Signals betrifft, wobei der Ausgang des zweiten UND-Gatters (P2) mit dem Null-Rücksetzeingang eines zweiten Schieberegisters (R2) zum Definieren eines Fensters für die vom Fahrzeugfahrplanspeicher (9) ausgegebenen Signale und mit dem Null-Rücksetzeingang eines zweiten Pufferspeichers (M2) für die vom Fahrzeugfahrplanspeicher (9) ausgegebenen Signale verbunden ist,
- wobei der Zwischenspeicher (M2) mit einem Eingang sowohl des ersten als auch des zweiten UND-Gatters (P1, P2) verbunden ist,
- ein drittes UND-Gatter (P3), dessen einer Eingang mit dem Ausgang des ersten Pufferspeichers (M1) verbunden ist und dessen zweiter Eingang mit dem Ausgang eines Adressenzählers (C1) verbunden ist, der den Zugriff auf den Fahrzeugfahrplanspeicher (9) steuert, und dessen Ausgang mit dem Eingang eines zweiten Schieberegisters (R2) zum Definieren eines Raumfensters für fiktive Bakensignale des Fahrzeugfahrplanspeichers (9) verbunden ist,
- ein viertes UND-Gatter (P4), dessen einer Eingang mit dem Ausgang des ersten Pufferspeichers (M1) verbunden ist und dessen anderer Eingang mit dem Ausgang des Adressenzählers (C1) verbunden ist und dessen Ausgang mit dem Null-Rücksetzeingang (RAZ) des ersten Schieberegisters (R1) sowie mit einem Null-Rücksetzeingang des ersten Pufferspeichers (M1) verbunden ist,
- wobei die Ausgänge des ersten und des zweiten Schieberegisters jeweils mit einem Eingang eines ODER-Gatters (P5) verbunden sind, das zum Ausgeben von Notbremsbefehlsignalen vorgesehen ist.

2. Regelvorrichtung nach Anspruch 1, dadurch gekennzeichnet, daß der Übergeschwindigkeitskreis (10) aufweist: einen Frequenzmesser (F1), der mit dem Ausgang der Bakenerkennungseinrichtung (3) verbunden ist, eine Einrichtung (LV) zum Lesen der in dem Fahrzeugfahrplanspeicher (9) gespeicherten Sollgeschwindigkeit, einen numerischen Komparator (Co) zum Vergleichen der Ausgangssignale des Frequenzmessers (F1) und der Lesevorrichtung (LV), der an seinem Ausgang Notbremsbefehlssignal ausgibt, wenn die von der Erkennungseinrichtung (3) erkannte Geschwindigkeit über der Sollgeschwindigkeit liegt.

3. Regelvorrichtung nach einem der Ansprüche 1 und 2, dadurch gekennzeichnet, daß der Fahrzeugfahrplanspeicher (9) Kodes enthält, die fiktiven Baken zum Anzeigen neuer Regelgeschwindigkeiten entsprechen, um die Fahrzeuggeschwindigkeit an bestimmten Punkten der Strecke zu modifizieren, wobei das Lesen dieser Geschwindigkeitsbaken durch von der Bakenerkennungseinrichtung (3) kommende Wegstreckensignale gesteuert ist.

4. Regelvorrichtung nach einem der Ansprüche 1 und 2, dadurch gekennzeichnet, daß der Fahrzeugfahrplanspeicher (9) Kodes enthält, die parasitären Baken entsprechen, die die Erkennungseinrichtung (3) während der Bewegung des Fahrzeugs erkennt.
